# EUROPÄISCHE PATENTSCHRIFT

(11) **EP 0 466 964 B1**
(45) Veröffentlichungstag und Bekanntmachung des Hinweises auf die Patenterteilung: **02.02.1994**
(21) Anmeldenummer: 90113902.2
(22) Anmeldetag: 20.07.1990
(51) Int. Cl.: G01G 19/44, G01G 21/18, G01G 21/23

(54) **Wägevorrichtung mit zwei einander überlappenden Wägehebelanordnungen**
Weighing apparatus with two lever systems overlapping each other
Dispositif de pesage avec deux systèmes à levier se superposant mutuellement

(43) Veröffentlichungstag der Anmeldung: 22.01.1992
(73) Patentinhaber: Seca GmbH, D-22089 Hamburg (DE)
(72) Erfinder: Aschke, Walter, Dipl.-Ing., D-2104 Hamburg 92 (DE)
(74) Vertreter: Patentanwälte Hauck, Graalfs, Wehnert, Döring, Siemons

(56) Entgegenhaltungen:
- EP-A- 0 322 543
- DE-A- 2 528 426
- DE-A- 3 913 415
- FR-A- 2 321 114

## Beschreibung

Die Erfindung betrifft eine Wägevorrichtung mit zwei einander überlappenden Wägehebelanordnungen, die im mittleren Bereich der Wägevorrichtung schwenkbar über Schneidenlager und Schneiden aufweisende Verbindungsgestänge verbunden sind und die mit den äußeren Enden an einer Bodenplatte angeordnet sind, wobei eine zur Bodenplatte bewegliche Anordnung vorgesehen und ferner eine Skalenanzeige mit einer Hebelanordnung in Verbindung steht.

Solche Wägevorrichtungen sind in flacher Ausführung als Personenwaagen bekannt. Dabei ist es auch bekannt, daß von den Wägehebelanordnungen wenigstens eine U-förmig ausgeführt ist und mit zwei Schenkeln an deren Hebelenden eine Schneidenabstützung erfolgt, während die andere Wägehebelanordnung aus zwei Hebeln besteht, deren äußere Enden auch auf einer Schneidenanordnung abgestützt ist und deren innere Enden mit dem Verbindungsgestänge in Eingriff stehen.

Eine solche Ausführung ist beispielsweise aus der DE OS 26 36 141 bekannt. Dabei ist an der U-förmigen Wägehebelanordnung der Antrieb für die Zahnstange vorgesehen.

In der bekannten Ausführung sind die aus einem senkrecht zur Bodenplatte gerichteten Blechprofil bestehenden Wägehebelanordnungen mittels pfannenartigen Einschnitten auf Abstützungen gelagert, die für alle Hebelenden fest auf der Bodenplatte angeordnet sind. Hierbei ergibt sich ein geringes Anpassungsvermögen, wobei sich vor allem durch Verlagerungen in der Schwenkabstützung Übersetzungsfehler einschleichen können, zumal diese durch die Verbindungsgestänge ermöglicht werden. Außerdem entsteht eine ungenaue Anzeige, weil die Zuordnung zu den schwenkbaren Auflagerungen auch in bezug zu den Abstützungen für eine Wägebrücke undefiniert sind. Solche Abstützungen sind jeweils in der Nähe der äußeren Enden der Wägehebelanordnungen an diesen angebracht.

Bekannt ist dabei auch, daß eine und insbesondere U-förmige Wägehebelanordnung mit ihrem Steg an einer Hauptfeder abgestützt ist, die einstellbar sein kann und die eigentliche Abstützung der Wägevorrichtung bildet.

Die Erfindung ist nicht auf eine solche Abstützung beschränkt. Es wird einbezogen, daß auch Meßdosen angeordnet sein können, wobei dann jedoch die Zahnstangenantriebe entfallen und eine Digitalanzeige vorgesehen ist.

Die bekannten Ausführungen haben den Nachteil der Ungenauigkeit, weil die Auflagerungen der Wägehebelanordnungen undefiniert sind und in wenigstens einer der Richtungen, die Längs- und Seitenrichtung umfassen, Spiel zulassen, um überhaupt einen Zusammenbau zu ermöglichen. Die starre Abstützung der Auflager auf der Bodenplatte führt dabei zusätzlich zu Ungenauigkeiten, weil bei Auslenkungen über die gehängeartigen Verbindungsgestänge Seiten- und Längskräfte hervorgerufen werden, die die Auflagerung der Enden der Wägehebelanordnungen beeinträchtigen und insofern einerseits zu Ungenauigkeiten, andererseits zur kurzen Lebensdauer im Bereich mit der Belastung führen.

Bekannt ist daher auch bereits, in Wägehebelanordnungen, deren Schenkel ein nach unten offenes U-förmiges Profil haben, Schneiden aus besonders gehärtetem Material einzusetzen. Diese Schneiden ragen seitlich aus den Profilen heraus. Die Aufhängung an der Bodenplatte erfolgt dabei über Gehänge, die in einem oberhalb der Schneiden angeordneten Träger eingehängt sind. Diese Ausführung baut hoch, weil sie noch von der Wägebrücke überdeckt werden muß. Die seitliche Aufhängung führt Kräfte mit Biegemoment in die Wägehebelanordnungen ein, so daß an sich der Vorteil genauerer Schneidenlagerungen durch die einseitige Belastung der Wägehebelanordnungen beeinträchtigt wird.

Die Aufhängung an einem Träger gibt zwar die Möglichkeit schon zu einer Anpassung der äußeren Enden der Wägehebelanordnungen, hat aber den Nachteil, daß dadurch eine schwimmende Abstützung der Wägebrücke erfolgt. Gerade bei Personenwaagen können sich Beeinträchtigungen in der Genauigkeit ergeben, wenn die Wägebrücke mit Schub betreten wird, abgesehen davon, daß für solche Bewegungsmöglichkeiten Raum vorbehalten bleiben muß. Dieses mag nun zwar im Hinblick auf die genauere Abstützung tolerierbar sein, aber es ergeben sich zusätzlich nicht genau definierte Belastungen in verschiedenen Richtungen, die die Lagerung beeinträchtigen.

Der Erfindung liegt die Aufgabe zugrunde, eine Wägevorrichtung zu schaffen, welche bei einer praktisch in ihrer Ebene unverschieblichen Anordnung der Wägebrücke eine Führung derselben schafft, welche bei flacherer Ausführung als bisher die erforderliche Nachgiebigkeit aufgrund der Belastung aufnimmt und dabei zugleich die Präzision durch den Krafteintrag in Wägehebelanordnungen verbessert.

Diese Aufgabe wird bei der eingangs angegebenen Wägevorrichtung erfindungsgemäß dadurch gelöst, daß die Enden einer Wägehebelanordnung durch einen Pendelfuß mit schwenkbarer Bewegungsmöglichkeit entsprechend einer Fußabrundung auf der Bodenplatte abgestützt sind und jeweils die Enden der Wägehebelanordnungen eine Schneidenblockanordnung mit zwei im wesentlichen entgegengesetzten Schneiden aufnehmen, wobei eine Abstützung in Schneidenlagern unterhalb der Wägehebelanordnungen vorgesehen ist.

Die Pendelfüße lassen eine Nachfolgebewegung parallel zur Bodenplatte zu mit dem Vorteil, daß unter Gewichtsbelastungen Schwingungen ausgeschlossen werden und dabei die vertikale Führung der Wägebrücke gewährleistet wird, wobei diese Abstützung von unten her die besondere Schneidenblockanordnung innerhalb eines U-förmigen Profils der Wägehebel ermöglicht. Dadurch werden seitliche Verkantungen oder Verfälschungen durch die Krafteinleitung von Lagerabstützungen vermieden.

Die Abstützung von unten führt, abgesehen von einer baulichen Vereinfachung, auch zu einem flacheren Aufbau der Waage, wobei nun mit Vorteil noch erhöhte Genauigkeit erreicht wird.

Vorteilhaft sind in diesem Sinne die Schneidenblockanordnungen und die Schneidenlager mittig in bezug zu den Wägehebeln angeordnet und übertragen die Stützkräfte mittig auf die Wägehebel. Hierdurch lassen sich erhöhte Genauigkeiten auch unter geringerem Materialaufwand erreichen.

Mit besonderem Vorteil ist für den Pendelfuß eine Zentrierung vorgesehen derart, daß ein an der Bodenplatte angeordneter Zapfen mit Spiel ein Loch in einer Verbindungsfläche zwischen Seitenflächen des Pendelfußes durchsetzt. Dieses hat den Zweck, den Pendelfuß zu fixieren, wobei die Beweglichkeit erhalten bleibt.

Dabei liegt eine zweckmäßige Ausführungsform darin, daß der Pendelfuß in seinem unteren Bereich jeweils seitwärts seiner mit einer Abrollkufe ausgeführten Schenkel nach außen hervorragende Ansätze hat, die zwischen sich einen Zwischenraum frei lassen, wobei die engste Stelle des Zwischenraumes in Höhe der bogenförmigen Auflagerflächen liegt und daß aus der Bodenplatte nach oben gerichtete Anschläge durch die Zwischenräume greifen.

Dieses ist eine leicht herstellbare und wirkungsvolle Ausführungsform, die noch in einer weiteren Ausgestaltung dadurch verbessert wird, daß die nach oben gerichteten Anschläge aus einer aus der Bodenplatte oder einer auf ihr befestigten Platte von im mittleren Bereich angeordneten, ausgestanzten und nach oben hochgezogenen Abbiegung in Form einer Lasche bestehen, welche den Zwischenraum durchsetzt und den Pendelfuß an einer bestimmten Stelle auf der Bodenplatte hält.

In einer anderen zweckmäßigen Ausgestaltung haben die Ansätze zur Mitte, d.h. zu dem Zwischenraum, schneidenartig zulaufende Ansätze, so daß diese Ansätze bei der Pendelbewegung mit einem Spiel zu der Lasche die Ausrichtung gewährleisten.

Die erwähnte Schneidenblockanordnung ist in der besonders bevorzugten Ausführungsform als Bauteil mit zwei parallelen Stegen ausgeführt, die an wechselseitig entgegengesetzt liegenden Rändern als Schneiden ausgebildet und vorteilhaft durch Längsstege starr zueinander gehalten sind, und diese Schneidenblockanordnungen sind in die Enden der Wägehebelanordnung eingebracht. Hierbei ist eine Einbringung mit Passung und Widerlagern vorgesehen. Die Schneidenblockanordnung bildet ein in sich starres Bauteil, so daß die Schneiden nicht mehr relativ zueinander bewegbar sind, was bei einer Einbringung in einen Blechträger unter Belastung möglich wäre. Die Blockanordnung mit den parallelen Stegen läßt dabei auch einen Einsatz in U-förmige Träger der Wägehebelanordnungen zu, ohne daß dann Änderungen auftreten. Die absolute Ausrichtung der beiden zueinander in bezug stehenden Schneiden entlastet die Anordnung im Träger an sich, so daß er auch aus diesem Grunde leichter ausgeführt werden kann als bisher.

Auch bei einer Ausführung, in welcher die Enden der Wägehebelanordnung an der Wägebrücke im Bereich des Ritzels für eine Skalenanzeige liegen und fest an der Bodenplatte angeordnet sind, ist in der bekannten Ausführung eine im Sinne der Aufgabenstellung besonders günstige Anordnung der Wägebrücke in Verbindung mit einer Führung vorgesehen. Aber auch bei einer solchen Ausgestaltung sind an den genannten Enden mit den genannten Vorteilen die Schneidenblockanordnungen eingesetzt.

Die Erfindung wird anhand von Ausführungsbeispielen erläutert, die in der Zeichnung schematisch dargestellt sind. In der Zeichnung zeigen:
- Fig. 1: eine Draufsicht auf eine Hebelanordnung einer Wägevorrichtung in Teildarstellung, in Draufsicht auch mit den Abstützungen einer nicht dargestellten Wägebrücke;
- Fig. 2: eine Seitenansicht von Fig. 1 in Teildarstellung;
- Fig. 3: eine Teilseitenansicht aus der Darstellung in Fig. 2 in vergrößertem Maßstab zur Erläuterung von Einzelheiten;
- Fig. 4: eine Seitenansicht eines Pendelfußes in einer prinzipiellen Ausgestaltung mit Aufnahme für ein Schneidenlager;
- Fig. 5: eine Draufsicht auf Fig. 4;
- Fig. 6: eine Seitenansicht eines Pendelfußes, gesehen unter rechtem Winkel bezüglich Fig. 4 mit einer eingesetzten Schneidenpfanne und Bodenplatte;
- Fig. 7: eine Draufsicht auf Fig. 6 mit der Darstellung der Schneidenpfanne einschließlich eines Bodenplattenteils mit nach oben gerichteten Anschlägen;
- Fig. 8: eine Seitenteilansicht eines Pendelfußes, etwa gesehen entsprechend der Fig. 4, jedoch in Verbund einerseits mit einer Bodenplatte und andererseits mit Schneidenblockanordnungen am Ende eines Wägehebels;
- Fig. 9: eine Draufsicht auf Fig. 8, gesehen in Richtung des Pfeiles IX in Fig. 8;
- Fig. 10: eine Seitenansicht eines Schneidenblockes
- Fig. 11: eine Draufsicht auf einen solchen Schneidenblock
- Fig. 12: eine schematische Seitenansicht der unverlagerbaren Abstützung einer Wägehebelanordnung auf der Bodenplatte;
- Fig. 13: eine Draufsicht auf Fig. 12.

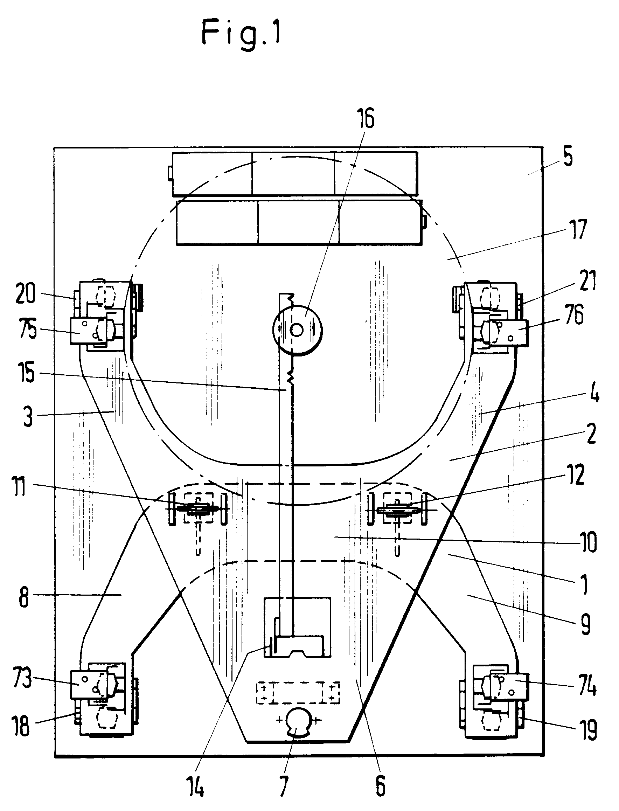

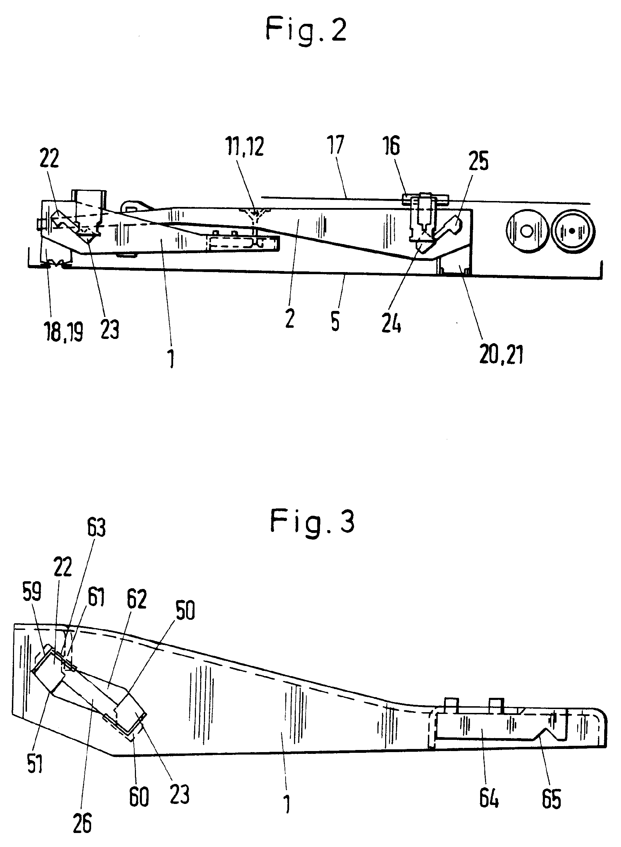

Die Figuren 1 und 2 zeigen eine schematische Zusammenstellung.

Gemäß Fig. 1 hat eine Personenwaage flacher Ausführung, insbesondere eine Badezimmerwaage, zwei im wesentlichen U-förmige Wägehebelanordnungen 1, 2, von denen der Wägehebel 2 mit seinen Schenkeln 3, 4 an einem fest auf einer Bodenplatte 5 der Waage angeordneten Widerlager pendelfähig abgestützt ist, während sein anderes Ende 6, an welchem die Schenkel zusammengeführt sind, über eine Federanordnung 7 ebenfalls auf der Bodenplatte 5 abgestützt ist. Der Wägehebel 1 ist mit den Enden seiner beiden Schenkel 8, 9 demgegenüber auf der Bodenplatte 5 in besonderer Weise abgestützt und mit seinem die Schenkel zusammenführenden Steg 10 über Gehänge-Verbindungsgestänge 11, 12 mit dem mittleren Bereich der Schenkel 3, 4 des Wägehebels 2 verbunden.

Der Vollständigkeit halber wird bemerkt, daß an der Wägehebelanordnung 2 in einer nicht näher beschriebenen Weise ein Stellhebel 14 für eine Zahnstange 15 angelenkt ist, die in ein Ritzel 16 eingreift, das eine Zeiger- oder Skalenausführung 17 der Waage antreibt.

In der bevorzugt beschriebenen Ausführungsform sind die Enden der Schenkel 3, 4; 8, 9 der Wägehebelanordnungen 1, 2 nicht über ein Gehänge mit der Bodenplatte 5 verbunden, was gemäß bekannten Ausführungen zu einer Gehängeanordnung mit Trägern über den Wägehebelanordnungen führt. Die Abstützung erfolgt jeweils an der Bodenplatte 5 und dann einerseits über die Pendelfüße 18, 19 und andererseits für die Wägehebelanordnung 2 ortsfest über Abstützungen 20, 21.

Wenn eine schwimmende Lagerung in Kauf genommen würde, könnten auch an dieser Stelle Pendelfüße angeordnet sein. Das Wesentliche ist, daß die Abstützung immer von unten und wenigstens an einem Ende einer der Wägehebelanordnungen 1, 2 beweglich über Pendelfüße erfolgt. Diese Abstützung über Pendelfüße hat den Vorteil, daß die Schneidenauflager mit den im Querschnitt rhombenförmigen Profilstücken 22, 23 (Fig. 2) an der Bodenplatte 5 abgestützt sind.

Die beiden rhombenförmigen Profilstücke 22, 23 sind im Bereich der Pendelfüße 18, 19, aber auch der festen Abstützungen 20, 21 angeordnet. Sie sind in diesem Bereich mit 24, 25 bezeichnet.

In Fig. 3 wird die Anordnung anhand des Wägehebels 1 verdeutlicht. Dabei ist ein Schenkel dargestellt, in welchem ein Schneidenblock 26 mit den Profilstücken 22, 23 und insbesondere den an diesen angeordneten Schneiden 50, 51 gezeigt ist. Hierbei ist die Schneidenblockanordnung in die parallel zur Zeichnungsebene verlaufenden Wandstege des Schenkels der Wägehebelanordnung 1 eingedrückt, wobei Zentrierungsansätze 59, 60 für eine seitliche Ausrichtung sorgen und abgesehen von der Halterung ein als Lasche abgewinkelter Anschlag 61 den Sitz in einer Ausnehmung 62 der seitlichen Schenkel gewährleisten. Hierdurch ist schon die Genauigkeit erhöht, wobei für die Lasche 61 eine Eingriffsprofilierung 63 vorgesehen ist. Vor allem ist aber die absolut konstant bleibende Zuordnung der Schneiden 50, 51 zueinander gewährleistet.

Dies gilt auch für die anderen Schneidenblockanordnungen, die gezeigt sind.

Der Vollständigkeit halber wird zu Fig. 3 bemerkt, daß im Bereich der Gehänge 11, 12 (Fig. 1 und 2) in das Hohlprofil ein gehärtetes Blechstück 64 eingesetzt ist, das eine nach unten offene Pfanne 65 hat, in welche dann eine Schneide eingreift, welche durch ein überbrückendes Gehänge gehalten ist. Die Schneide kann auch in das Gehänge integriert sein.

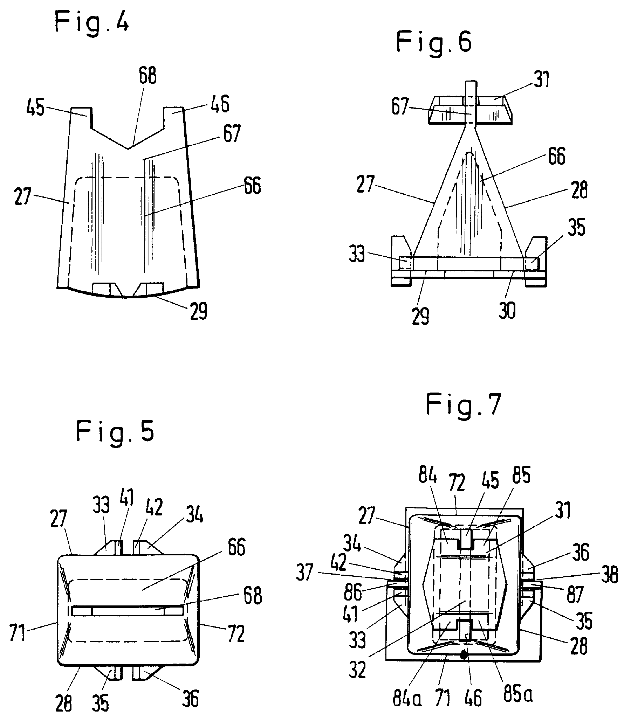

Ein wesentliches Merkmal ist der Pendelfuß, der bereits oben unter 18, 19 erwähnt ist. Ein solcher Pendelfuß ist in verschiedenen Ansichten in den Figuren 4 bis 8 dargestellt. Er bietet eine Abstützung von unten mit Abrollmöglichkeit entsprechend einer Längsbewegung der Wägehebelanordnungen, wobei eine reibungsfreie Nachfolgebewegung möglich ist, zugleich aber auch die Abstützung mit dieser präzisen Bewegbarkeit von unten in der Mitte der Schenkel der Wägehebelanordnung gewährleistet ist und eine Unverschiebbarkeit durch einen Eingriff aus der Bodenplatte erreicht wird.

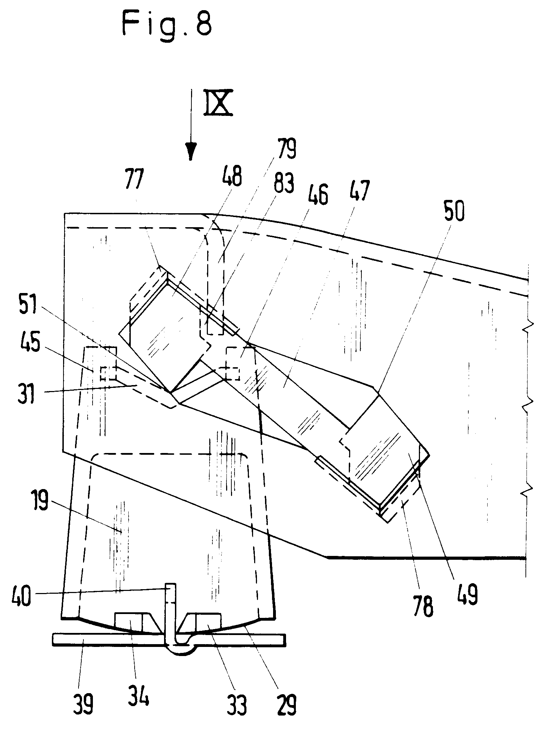

Der Pendelfuß hat nach Fig. 6 zwei gespreizte Schenkel 27, 28. Diese Schenkel, von denen einer 27 in Fig. 4 gezeigt ist, haben nach unten konvex gewölbte Auflagerflächen 29, 30, mit denen sie auf der Bodenplatte abrollen können. Dazu wird auch auf Fig. 8 verwiesen.

Die gespreizten Schenkel 27, 28 sind durch einen mittleren Hohlraum 66 voneinander getrennt, so daß eine verstrebte Anordnung besonderer Festigkeit vorliegt. Der Hohlraum 66 ergibt sich auch aus Fig. 4. Dabei ist erkennbar, daß ein mittlerer Steg 67 symmetrisch zu beiden gespreizten Schenkeln 27, 28 nach oben gerichtet ist und eine Auflagerprofilierung 68 für eine Auflagerpfanne 31 zur Bildung eines Schneidenlagers 32 dient. Diese Auflagerpfanne 31 geht auch aus Fig. 7 hervor. Dabei sind die beiden nach oben ragenden Ansätze 45, 46 (Fig. 4) neben der Auflagerprofilierung erkennbar. Außerdem sind die Schenkel 27, 28 von oben zu sehen. Die Stirnseiten 71, 72 ergeben sich aus den Figuren 5, 7 und 9.

Es handelt sich insofern um einen Hohlträger besonderer Stabilität aufgrund seiner Ausgestaltung mit der Aufnahmemöglichkeit einer gehärteten Pfanne.

Die Auflagerflächen 29, 30 haben in ihrem mittleren Bereich nach außen seitlich vorragende Ansätze 33, 34 bzw. 35, 36. In die Zwischenräume 37, 38 ragen nach oben Anschläge, die auch bei einer Verschwenkung eine Zentrierung gewährleisten. Solche Anschläge können nach Fig. 8 aus einer aus der Bodenplatte oder einer auf ihr befestigten Platte 39 von im mittleren Bereich angeordneten, ausgestanzten und nach oben hochgezogenen Abbiegung in Form einer Lasche 40 bestehen, die die Zwischenräume 37, 38 nach Fig. 7 durchsetzt und damit den Pendelfuß an einer bestimmten Stelle auf der Bodenplatte 5 hält. Erkennbar ist, daß die Ansätze 33-36 zur Mitte, d.h. zu dem Zwischenraum, schneidenartig zulaufende Ansätze 41, 42 haben, so daß diese Ansätze bei der Pendelbewegung mit einem Spiel zu der Lasche 40 die Ausrichtung gewährleisten, aber eine seitliche Ausweichbewegung verhindern.

Wenn oben die Pfanne 31 und das Schneidenlager 32 beschrieben sind, dann sind diese Teile auch in Fig. 7 gezeigt. Die Pfanne 31 (Fig. 6) besteht aus einem gehärteten Material und steht mit den Randansätzen 45, 46 zur Längsausrichtung und auch mit der anderen Profilierung 68 in Eingriff, um eine Ausrichtung unter Belastung zu gewährleisten.

Die Pfanne 31 kann auch randweise Vorsprünge haben, die den oberen Steg auf den Schenkeln 27, 28 der Pendelfüße 18, 19 einfassen.

Bei der Betrachtung der bisherigen Figuren ist dabei zu berücksichtigen, daß in der Fig. 1 auf den Pendelfüßen 18, 19 Abstützungen 20, 21 , Auflager 73, 74; 75, 76 für die Wägebrücke angeordnet sind. Darauf wird hingewiesen, um die Funktion zu berücksichtigen, weil sich daraus auch die Hebelübersetzungen ergeben.

Fig. 8 zeigt eine Schneidenblockanordnung 47 mit den Schneiden bzw. Schneidenschienen 48, 49, welche in einer in sich geschlossenen Baugruppe in die Randstege der Schenkel 3, 4; 8, 9 der Wägehebelanordnungen 1 und 2 eingepreßt sind. Die Schneide 50 greift dabei in eine Pfanne des Brücken-Schneidenlagers, während die Schneide 51 in die Pfanne 31 des Pendelfußes 19 eingreift.

Zur Auslegung wird auf die Figuren 4 und 5 verwiesen. Vor allem wird aber bemerkt anhand der Fig. 8, daß die an den Schneiden 48, 49 angeordneten Aufwärtsprofilierungen 77, 78 zur seitlichen Ausrichtung beim Einbau der im ganzen mit 47 bezeichneten Schneidenblockanordnung dienen, die somit fest eingebaut ist. Die Fig. 8 zeigt auch den abgewinkelten Anschlag 79, der die im ganzen mit 47 bezeichnete Schneidenblockanordnung an den Schenkeln einer Wägehebelanordnung hält.

Die Anordnung eines solchen abgewinkelten und damit in seiner Stellung auch anpassungsfähigen Anschlages 79 ist ein vorteilhaftes Merkmal, wobei für einen solchen Anschlag zum Eingriff in die Schneide bzw. Schneidenschiene 48, 49 an dieser eine Ausnehmung 83 angeordnet ist, deren untere Begrenzung auch zur Verhinderung einer Hochbewegung eingesetzt werden kann.

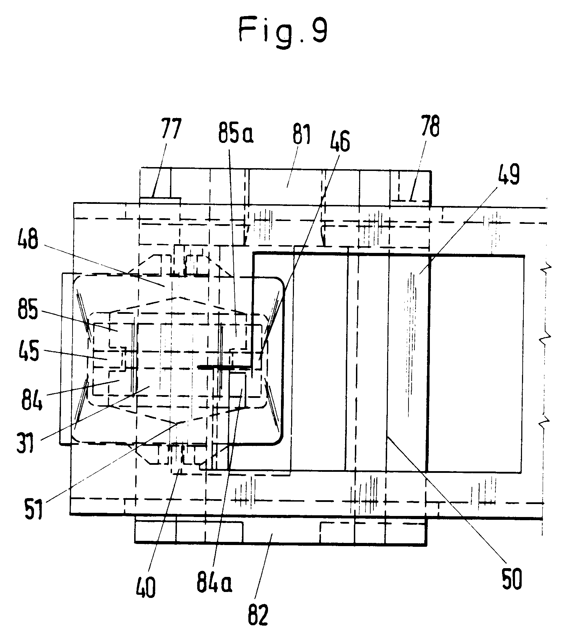

Die Draufsicht auf Fig. 8 in Form der Fig. 9 erläutert diese Anordnung mit den Schneidenschienen 48, 49, wobei im Vergleich mit den anderen Figuren erkennbar ist, daß für die Schneidenschienen ein fester Rahmen mit Seitenstegen 81, 82 vorliegt. Dieser Rahmen aus den Teilen 48, 49 und 81, 82 stellt eine in sich starre Baugruppe dar, die gewährleistet, daß die eigentlichen Schneiden immer in einer festen Zuordnung zueinander vorhanden sind. Hierbei kann einbezogen werden, daß die Seitenstege auch die Schenkel des U-Profils der Rahmen der Wägehebelanordnungen versteifen.

Der von der in sich starren quadratischen Baugruppe gebildete Bauteil mit den Schneidenschienen 48, 49 und den Seitenstegen 81, 82 ist in das Ende eines Schenkels einer Wägehebelanordnung eingepreßt, wobei seitliche Aufwärtsprofilierungen 77, 78 an den Enden der Schneidenschienen 48, 49 eine Seitenausrichtung dieser Baugruppe sichern, so daß der Einbau durch Einpressung und auch der Sitz in seitlicher Richtung erleichtert werden.

In Fig. 9 sind diese Zusammenhänge deutlich erkennbar, und zwar auch in Verbindung mit Fig. 8 und der Auflagerpfanne 31. Dabei ist erkennbar, daß diese Auflagerpfanne mit ihren Vorsprüngen 84, 85 bzw. 84 a und 85 a die Ansätze 45, 46 einfaßt. Dadurch wird die aus gehärtetem Material bestehende Pfanne anpassungsfähig in ihrer Stellung gehalten, wobei bezüglich der Ausführung nach den Fig. 6 bis 8 eine Pendelfußabstützung an der Platte 39 vorgesehen ist. Erkennbar sind dabei auch in Fig. 7 bzw. Fig. 8 die nach oben gebogenen Laschen, die in Fig. 8 mit 40 bezeichnet und aus einer Platte 39 abgebogen sind, und entsprechend die nach oben ragenden Ansätze 86, 87 aufweisen. Dadurch kann der Pendelfuß um die Verbindungslinie zwischen den Ansätzen 86, 87 pendeln, um der Bewegung des angeschlossenen Wägehebels nachzugeben.

Außerdem ist aber zugleich die Bewegung der Schneide 51 mit der Pfanne 31 vorgesehen, wobei diese Pfanne an den Ansätzen 45, 46 anpassungsfähig geführt wird. Dabei wird gewährleistet, daß der jeweilige Abstand exakt eingehalten wird. Es ist auch gezeigt, wie der sogenannte Pendelfuß auf seiner Abstützung gehalten wird.

Wenn Laschen 40 erwähnt sind, versteht sich, daß auch andere Zentrierungseinrichtungen vorgesehen sein können, beispielsweise in Form von aus einer untenliegenden Platte 39 aufsteigenden Schraubenschäften oder -spitzen, die Löcher bzw. Bohrungen im Pendelfuß mit Spiel durchsetzen. Solche Zentrierungseinrichtungen können auch nachgiebig ausgeführt sein.

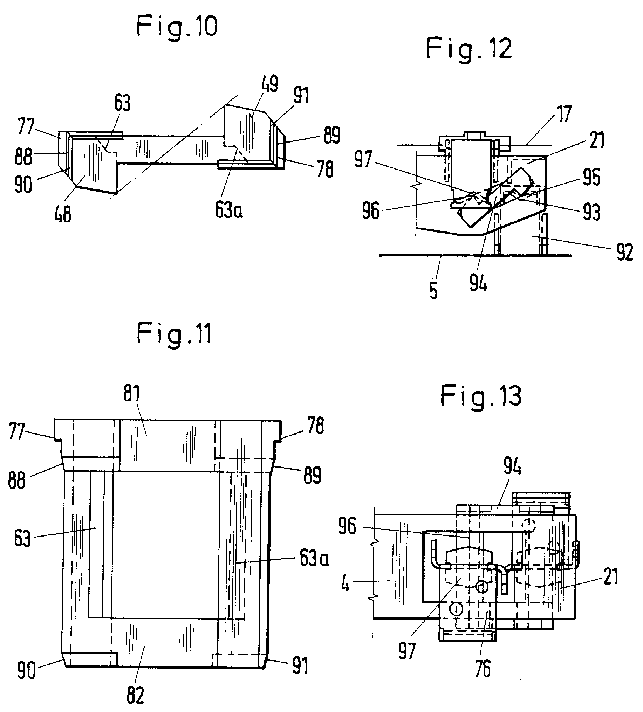

Weil die Baugruppe mit den Schneidenschienen 48, 49 und den an ihnen angeordneten Schneiden 50, 51 von besonderer Bedeutung ist, und zwar auch in Verbindung mit den Seitenstegen 81, 82 zur Bildung eines rahmenförmigen Aufbaues, ist diese Ausführung in den Fig. 10 und 11 besonders deutlich dargestellt. Dabei ergeben sich auch die diversen Auskehlungen und besonders die Aufwärtsprofilierungen 77, 78, die auch aus Fig. 10 erkennbar sind und die letzten Endes einen seitengerechten Einsatz gewährleisten.

Die Abschrägungen 88, 89 in Fig. 11 ergeben sich aus der Ansicht der Fig. 10, wobei erkennbar ist, daß in diesem Zusammenhang auch gemäß Fig. 9 der seitliche Einsatz mittels der mit Anzug versehenen Flächen zu einem besonders günstigen Zusammenbau führt. In Fig. 10 sind auch im Sinne einer erleichterten seitlichen Einführung im Bereich des anderen Steges 82 die Abschrägungen 90, 91 erkennbar.

Bezüglich der Schneidenschienen sind dann ferner auch die Eingriffsprofilierungen 63 und 63 a erkennbar.

Damit entsteht ein in sich starrer Rahmen, der leicht eingebaut werden kann, unverschiebbar festgelegt und noch durch eine Lasche gesichert ist, so daß dabei eine verbesserte Abstützung der Wägehebelanordnungen entsteht.

Die Figuren 12 und 13 zeigen ein Beispiel für die Abstützung 21 an dem Schenkel 4 der Wägehebelanordnung 2. Aus beiden Darstellungen ist erkennbar, daß eine unverschwenkbare Anordnung der Abstützung 21 an der Bodenplatte 5 vorgesehen ist. Diese Abstützung kann durch Schrauben festgelegt sein. Die Abstützung 21 wird durch eine Säule 92 gebildet, welche ein Schneidenlager 93 aufweist, wie es beispielsweise durch das Schneidenlager 32 in der Erläuterung der Figur 7 gezeigt ist.

Dabei ist erkennbar, daß durch Profilierungen eine Steifheit vorgesehen ist. Außerdem ist erkennbar, daß in das Ende des Schenkels 4 eine Schneidenblockanordnung 94 eingesetzt ist, wie sie schon oben im einzelnen mit 47 bezeichnet und dann auch beschrieben ist. Die eine Schneide 95 sitzt am Schneidenlager 93, die andere Schneide 96 untergreift das Schneidenlager 97, welches am Schenkel 4 angeordnet ist. Auf dem Schneidenlager 97 sitzt ein Auflager 76 für die Wägebrücke. Hierdurch ist die starre Verbindung zur Säule 92 erkennbar, weil auch die Schneidenblockanordnung 94 im Sinne von 47 einen starren und unverwindbaren Rahmen bildet, der im Inneren des Schenkels 4 sitzt und das in diesem verwindungsfrei abgestützte Schneidenlager 97 trägt.

In Fig. 12 ist noch die Zeiger- oder Skalenausführung 17 gemäß frührer Erläuterung gezeigt. Hierbei handelt es sich, wie in der früheren Ausführung, praktisch um eine Scheibe mit Antriebsrädern oder Ritzeln 16 und einer Zahnstange 15. Der Ausdruck Zeiger- oder Skalenausführung 17 ist gewählt, um offen zu halten, daß es sich sowohl um drehende Zeiger wie auch um drehende Skalen handeln kann, daß aber auch ein Geber für eine digitale Ausführung (z. B. elektrisch) möglich ist.

## Patentansprüche

1. Wägevorrichtung mit zwei einander überlappenden Wägehebelanordnungen (1, 2), die im mittleren Bereich der Wägevorrichtung schwenkbar über Schneidenlager und Schneiden aufweisende Verbindungsgestänge (11, 12) verbunden sind und die mit den äußeren Enden an einer Bodenplatte (5) angeordnet sind, wobei eine zur Bodenplatte bewegliche Anordnung vorgesehen und ferner eine Skalenanzeige (17) mit einer Hebelanordnung in Verbindung steht, dadurch gekennzeichnet, daß die Enden einer Wägehebelanordnung (1) durch einen Pendelfuß (18, 19) mit schwenkbarer Bewegungsmöglichkeit entsprechend einer Fußabrundung (29) auf der Bodenplatte (5) abgestützt sind und jeweils die Enden der Wägehebelanordnungen (1, 2) eine Schneidenblockanordnung (26) mit zwei im wesentlichen entgegengesetzten Schneiden (50, 51) aufnehmen, wobei eine Abstützung in Schneidenlagern (32) unterhalb der Wägehebelanordnungen vorgesehen ist.

2. Wägevorrichtung nach Anspruch 1, dadurch gekennzeichnet, daß die Schneidenblockanordnungen und die Schneidenlager mittig in bezug zu den Wägehebeln angeordnet sind und die Stützkräfte mittig auf die Wägehebel übertragen.

3. Wägevorrichtung nach Anspruch 1 oder 2, dadurch gekennzeichnet, daß für den Pendelfuß (18, 19) eine Zentrierung vorgesehen ist derart, daß ein an der Bodenplatte (5) angeordneter Zapfen mit Spiel ein Loch in einer Verbindungsfläche zwischen Seitenflächen des Pendelfußes durchsetzt.

4. Wägevorrichtung nach Anspruch 3, dadurch gekennzeichnet, daß der Pendelfuß in seinem unteren Bereich jeweils seitwärts seiner mit einer Abrollkufe ausgeführten Schenkel (27, 28) nach außen hervorragende Ansätze (33, 34 bzw. 35, 36) hat, die zwischen sich einen Zwischenraum (37, 38) frei lassen, wobei die engste Stelle des Zwischenraumes in Höhe der bogenförmigen Auflagerflächen (29, 30) liegt, und daß aus der Bodenplatte nach oben gerichtete Anschläge durch die Zwischenräume greifen.

5. Wägevorrichtung nach einem der Ansprüche 1 bis 4, dadurch gekennzeichnet, daß eine Schneidenblockanordnung (26, 47) als Bauteil mit zwei parallelen Stegen ausgeführt ist, die an wechselseitig entgegengesetzt liegenden Rändern als Schneiden ausgebildet sind.

6. Wägevorrichtung nach einem der Ansprüche 1 bis 5, dadurch gekennzeichnet, daß eine Schneidenblockanordnung durch Längsstege starr gehalten ist, und daß diese Schneidenblockanordnung in die Enden der Wägehebelanordnung eingebracht sind.

7. Wägevorrichtung nach Anspruch 4, dadurch gekennzeichnet, daß die nach oben gerichteten Anschläge aus einer aus der Bodenplatte oder einer auf ihr befestigten Platte (39) von im mittleren Bereich angeordneten, ausgestanzten und nach oben hochgezogenen Abbiegung in Form einer Lasche (40) bestehen, welche den Zwischenraum (37, 38) durchsetzt und den Pendelfuß an einer bestimmten Stelle auf der Bodenplatte (5) hält.

8. Wägevorrichtung nach Anspruch 4, dadurch gekennzeichnet, daß die Ansätze (33-36) zur Mitte, d.h. zu dem Zwischenraum, schneidenartig zulaufende Ansätze (41, 42) haben, so daß diese Ansätze bei der Pendelbewegung mit einem Spiel zu der Lasche (40) die Ausrichtung gewährleisten, die Berührungspunkte der Ansätze mit den Laschen auf gleicher Höhe mit den Abrollkufen des Pendelfußes liegen, wodurch Reibungsmomente minimiert werden.

9. Wägevorrichtung nach einem der Ansprüche 1 bis 8, dadurch gekennzeichnet, daß die Hebelanordnung (2) mit der Skalenanzeige (17) über eine Zahnstangenlagerung mit einem Zahnstangenantrieb (15) mit Eingriff in ein Ritzel (16) in Verbindung steht.

## Claims

1. Weighing apparatus comprising two lever systems (1,2) overlapping each other which are pivotally connected to each other in a central area of the weighing apparatus by means of edge-type bearings and coupling links (11,12), the outer ends of said lever systems being attached to a bottom plate (5), wherein an arrangement is provided which is movable with respect to said bottom plate, further comprising an indicating scale (17) including a linkage, characterized in that the ends of one (1) of said lever systems are supported on the bottom plate (5) by means of a pendulum foot (18,19) each including a curved profile performing a rocking motion on said bottom plate, and that the ends each of the lever systems (1,2) receive an edge-type bearing block means (26) including two substantially opposed bearing edges (50,51), wherein a support is provided in edge-type bearings (32) located below the lever systems.

2. Weighing apparatus of claim 1, characterized in that the edge-type bearing block means and the edge-type bearings are arranged centrally with respect to said weighing levers and that the supporting forces are centrally transmitted to the weighing levers.

3. Weighing apparatus of claim 1 or 2, characterized in that a centering means is provided for the pendulum foot (18,19) such that a lug arranged on the bottom plate (5) extends with play through a bore provided in a connecting surface between the sidefaces of the pendulum foot.

4. Weighing apparatus of claim 3, characterized in that the lower part of the pendulum foot includes outwardly directed projections (33,34 or 35,36) provided sidewards of each leg (27,28) including a curved profile, which projections leave a free space (37,38) therebetween, wherein the narrowest portion of the free space is located at the height of the arcuate bearing surfaces (29,30) and that upwardly oriented lugs extend from the bottom plate through the free spaces.

5. Weighing apparatus of one of claims 1 to 4, characterized in that a edge-type bearing block means (26,47) is designed as a part having a pair of parallel ridges having mutually opposed ends which are formed as bearing edges.

6. Weighing apparatus of one of claims 1 to 5, characterized in that a edge-type bearing block means is fixedly mounted by longitudinal ridges and that said edge-type bearing block means is inserted into the ends of the lever system.

7. Weighing apparatus of claim 4, characterized in that the upwardly directed lugs are formed by a tongue-shaped part (40) which is cut-out from a bottom plate or a plate (39) secured thereto in its central area, said part being upwardly bent and extending through the free space (37,38) to hold the pendulum foot to the bottom plate (5) in a predetermined position.

8. Weighing apparatus of claim 4, characterized in that the projections (33-36) include portions (41,42) tapering towards the center, i.e. the free space, such that said portions provide for an orientation including a play with respect to said tongue (40) for yielding the rocking motion, and that the contacting points of said portions with the tongues are located at the same height as the arcuate profile of the pendulum foot, thereby minimizing friction.

9. Weighing apparatus of one of claims 1 to 8, characterized in that the lever system (2) is linked to the indicating scale (17) through a tooth rack means including a tooth rack (15) engaging a pinion (16).

## Revendications

1. Dispositif de pesage comportant deux systèmes à levier (1, 2) disposés l'un au dessus de l'autre, reliés, de façon à pivoter, dans la zone centrale du dispositif de pesage au moyen de tiges de liaison (11, 12) portant des supports de couteaux et des couteaux, et disposés, avec leurs extrémités extérieures sur une plaque de base (5), tandis qu'il est prévu un ensemble mobile par rapport à la plaque de base et que, de plus, un indicateur gradué (17) est relié à un système à levier,
caractérisé en ce que les extrémités d'un système à levier (1), prennent appui sur la plaque de base (5) par l'intermédiaire d'un pied de balancier (18, 19), qui peut pivoter grâce à une forme arrondie (29) correspondante de sa base, et en ce que chacune des extrémités des systèmes à levier (1, 2) reçoit un système formant bloc à couteaux (26), comportant deux couteaux (50, 51) placés essentiellement l'un à l'opposé de l'autre, un appui étant prévu dans les supports de couteaux (32) en-dessous des systèmes à levier.

2. Dispositif de pesage suivant la revendication 1, caractérisé en ce que les systèmes formant bloc à couteaux et les supports de couteaux sont disposés au centre par rapport aux leviers de pesage et reportent les forces d'appui au centre sur les leviers de pesage.

3. Dispositif de pesage suivant la revendication 1 ou la revendication 2, caractérisé en ce que, pour le pied de balancier (18, 19), il est prévu un système de centrage tel qu'un tourillon disposé sur la plaque de base (5), traverse, avec jeu, un trou dans une surface de liaison entre les faces latérales du pied de balancier.

4. Dispositif de pesage suivant la revendication 3, caractérisé en ce que chacun des pieds de balancier, dans sa zone inférieure, présente, sur le côté, de son bras (27, 28) qui comporte une partie roulante, des saillies (respectivement 33, 34 et 35, 36) qui laissent libre entre elles un espace intercalaire (37, 38), le point le plus étroit de cet espace intercalaire se trouvant à la hauteur des surfaces d'appui (29, 30) de forme bombée, et en ce que des butées, partant de la plaque de base vers le haut, pénêtrent au travers de ces espaces intercalaires.

5. Dispositif de pesage suivant l'une quelconque des revendications 1 à 4, caractérisé en ce qu'un système formant bloc à couteaux (26, 47) est réalisé sous la forme d'une pièce de structure comportant deux réglettes parallèles, qui sont réalisées sous la forme de couteaux sur des bords respectivement opposés .

6. Dispositif de pesage suivant l'une quelconque des revendications 1 à 5, caractérisé en ce qu'un système formant bloc à couteaux est maintenu de façon rigide par des réglettes longitudinales et en ce que ce système formant bloc à couteaux est installé dans les extrémités du système à levier.

7. Dispositif de pesage suivant la revendication 4, caractérisé en ce que les butées tournées vers le haut sont constituées d'une partie pliée de la plaque de base ou d'une plaque (39) fixée sur elle, située dans la zone centrale, découpée par estampage et relevée vers le haut pour former une languette (40), qui traverse l'espace intercalaire (37, 38) et maintient le pied de balancier dans une position déterminée sur la plaque de base (5).

8. Dispositif de pesage suivant la revendication 4, caractérisé en ce que les saillies (33 - 36) comportent des saillants (41, 42) en forme de couteau, dirigés vers le centre, c'est-à-dire vers l'espace intercalaire, de telle façon que ces saillants, lors du mouvement du balancier, assurent, avec du jeu par rapport à la laguette (40), l'alignement, et les points de contact des saillants avec les languettes se trouvent à la même hauteur que les parties roulantes du pied de balancier, ce qui minimise les couples de frottement.

9. Dispositif de pesage suivant l'une quelconque des revendications 1 à 8, caractérisé en ce que le système à levier (2) est relié, à l'indicateur gradué (17), par l'intermédiaire d'un montage à crémaillère, comportant un entraînement de crémaillère (15), en engagement avec une roue dentée (16).
